(19) Europäisches Patentamt / European Patent Office / Office européen des brevets

(11) **EP 4 577 904 B1**

(12) **EUROPEAN PATENT SPECIFICATION**

(45) Date of publication and mention
of the grant of the patent:
**01.07.2026 Bulletin 2026/27**

(21) Application number: **23757307.6**

(22) Date of filing: **23.08.2023**

(51) International Patent Classification (IPC):
**G06F 7/483** *(2006.01)*    **G06F 7/499** *(2006.01)*
**G06F 7/523** *(2006.01)*

(52) Cooperative Patent Classification (CPC):
**G06F 7/5235; G06F 7/483; G06F 7/49942**

(86) International application number:
**PCT/EP2023/073111**

(87) International publication number:
**WO 2024/042117 (29.02.2024 Gazette 2024/09)**

(54) **METHOD FOR PERFORMING AN OPERATION IN A CRYPTOGRAPHIC APPLICATION**

VERFAHREN ZUR DURCHFÜHRUNG EINER OPERATION IN EINER KRYPTOGRAPHISCHEN ANWENDUNG

PROCÉDÉ POUR EFFECTUER UNE OPÉRATION DANS UNE APPLICATION CRYPTOGRAPHIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.08.2022 EP 22192312**

(43) Date of publication of application:
**02.07.2025 Bulletin 2025/27**

(73) Proprietor: **Belfort Labs BV**
**3000 Leuven (BE)**

(72) Inventors:
• **D'ANVERS, Jan-Pieter**
**3000 Leuven (BE)**
• **VAN BEIRENDONCK, Michiel**
**3000 Leuven (BE)**

(74) Representative: **Winger**
**Mouterij 16 bus 101**
**3190 Boortmeerbeek (BE)**

(56) References cited:
• **SU YANG ET AL: "FPGA-Based Hardware Accelerator for Leveled Ring-LWE Fully Homomorphic Encryption", IEEE ACCESS, IEEE, USA, vol. 8, 10 September 2020 (2020-09-10), pages 168008 - 168025, XP011810425, DOI: 10.1109/ACCESS.2020.3023255**
• **ROBIN GEELEN ET AL: "BASALISC: Programmable Asynchronous Hardware Accelerator for BGV Fully Homomorphic Encryption", ARXIV.ORG, CORNELL UNIVERSITY LIBRARY, 201 OLIN LIBRARY CORNELL UNIVERSITY ITHACA, NY 14853, 24 August 2022 (2022-08-24), XP091301341**
• **SUJOY SINHA ROY ET AL: "FPGA-based High-Performance Parallel Architecture for Homomorphic Computing on Encrypted Data", vol. 20190220:174016, 14 February 2019 (2019-02-14), pages 1 - 12, XP061031839, Retrieved from the Internet <URL:http://eprint. iacr.org/2019/160.pdf> [retrieved on 20190214]**

**Description**

**Field of the invention**

The present invention is generally related to the field of cryptography. More in particular, it relates to methods and devices for performing operations in a cryptographic application.

**Background of the invention**

In a context like, e.g., cloud computing users run a certain risk when uploading raw data to untrusted cloud servers. Therefore, it is required that sufficient security be provided to protect the users' data. A promising new technology that has emerged in the field of data security is Fully Homomorphic Encryption (FHE), which allows one to perform homomorphic computations on encrypted data (ciphertext) without learning further information about that data. In other words, it is not required to first decrypt the data. Methods to perform FHE have been improved over the years up to the point that practical application has become possible.

FHE algorithms are often executed on cloud compute servers. Computations are however slow. The ciphertext data on which computations are performed in a FHE scheme, are large polynomials (length N) from a certain scheme-dependent polynomial ring. Typical operations on these polynomials include addition and multiplication. While addition is linear in the length of the polynomial (O(N) operations), multiplication has a quadratic cost ($O(N^2)$ operations) when using a generic straightforward technique, also known as schoolbook multiplication.

One of the main challenges in practical applications of FHE is its computational overhead. As one of the costliest operations of the FHE scheme is the polynomial multiplication, speeding up the multiplication operation may substantially contribute to a reduction of the computational overhead. This can be achieved by exploiting specific properties of the polynomials. Various well-studied algorithms are available to speed up such multiplication, including the Number Theoretic Transformation (NTT), Toom-Cook multiplication or Karatsuba multiplication. A multiplication using the NTT is generally the most efficient of these algorithms, but it also imposes the most stringent conditions on the polynomial ring used. As such it cannot be used for every FHE scheme.

FHE schemes typically use the NTT for fast polynomial multiplication when the underlying ring structure allows it. Two notable exceptions where the NTT is not applied, are the FHEW scheme as disclosed in the paper "FHEW: Bootstrapping homomorphic encryption in less than a second" (L. Ducas et al., Eurocrypt, pp. 617-640, 2015) and the TFHE scheme described in "TFHE: Fast Fully Homomorphic Encryption Over the Torus" (I. Chillotti et al., J.Cryptol. 33, 34-91, 2020). They both have a ring structure that prohibits the use of the NTT. Instead, these schemes can use Toom-Cook multiplication, Karatsuba multiplication or the Fast Fourier Transform (FFT) for fast polynomial multiplication, where typically FFT is the fastest option. The latter transformation is similar to the NTT transformation but has less stringent conditions on the polynomial ring. FHEW and TFHE both enable the use of homomorphic Boolean algebra, e.g., NAND, XOR and XNOR logic gates.

Each FHE operation introduces a certain amount of noise into the ciphertext required for security. FHE is tolerant to this noise as long as a certain threshold level of the noise is not exceeded. Therefore, an FHE scheme has to periodically invoke a bootstrapping operation to decrease the amount of noise in the ciphertext so that one remains below the threshold noise level. TFHE and FHEW differ from prior FHE schemes in that they invoke a bootstrapping operation after every homomorphic Boolean gate. The bootstrapping operation is preferably kept short in TFHE schemes.

To represent a number in a computer architecture a type of representation must be chosen (e.g., fixed-point / floating point / integer) as well as a set of parameters (e.g., mantisse size, exponent size, ...). Precision and dynamic range are measures of how accurate a number can be represented. Precision defines how many bits are used to represent the number. The dynamic range defines the smallest or largest value that the number can represent.

Real numbers can be represented with finite precision in various ways. On a CPU, the typical method is to use floating-point numbers with single or double precision. The precision is defined by the size of the mantissa and the dynamic range by the size of the exponent. This approach is efficient due to the integration of a floating-point unit (FPU) in CPUs and it is therefore the typical representation-of-choice for software designers. Implementations of the above-mentioned TFHE and FHEW schemes have been restricted to double-precision floating point FFTs because single-precision FFTs were found to introduce too much noise. Double-precision floating-point FFTs have been found to keep the amount of noise introduced small enough. A fixed-point representation is determined by the number of bits in the representation and by the scaling factor. In a fixed-point representation the mantissa has a fixed number of bits.

Also the paper "MATCHA: A Fast and Energy-Efficient Accelerator for Fully Homomorphic Encryption over the Torus" (L. Jiang et al., 59th Annual Design Automation Conference 2022, July '22, prepublished on the Internet on Feb.17, 2022) is concerned with the above-mentioned TFHE scheme. A hardware accelerator to process TFHE gates is presented that in terms of efficiency outperforms accelerators that frequently invoke expensive double-precision floating point FFT and IFFT kernels. In order to fully take advantage of the error tolerance capability of TFHE, polynomial multiplications are accelerated by using approximate multiplication-less integer FFTs and IFFTs requiring only additions and binary shifts. Although approximate FFTs and IFFTs introduce errors in each ciphertext, the ciphertext can still be correctly decrypted, since the errors can be rounded off along with the noise during decryption. The integer representations can be seen as versions of a fixed-point representation that have been scaled to remove the decimal point.

When determining the error caused by the limited accuracy of the number representations in FFTs and IFFTs, this error is found for a given number representation (e.g., floating-point, fixed-point) or a given precision (e.g., 32 bits). If the bit width or any other cryptographic parameter is changed, the error calculation needs to be performed all over again. It would therefore be beneficial to have a technique wherein the effect of a changing parameter on the resulting error can be calculated upfront.

Hence, there is a need for a method wherein the representation of data can be adapted in a flexible way each time a new error calculation is made after that a cryptographic parameter has changed. This should hold not only for an FFT-based multiplication, but also in general for any operation performed on an operand in a cryptographic application.

## Summary of the invention

It is an object of embodiments of the present invention to provide for a method to determine parameter values of a variable when performing an operation on an input operand in a cryptographic application, with one or more constraints imposed on the output of said operation.

The above objective is accomplished by the solution according to the present invention.

In a first aspect the invention relates to a method for deriving by means of a device comprising processing means one or more parameters determining a representation of a variable used when performing an operation on an input operand in a cryptographic application, whereby a resulting output of performing said operation meets one or more predefined constraints. The operation comprises one or more subtasks, wherein a subtask of the operation outputs the variable as an input for a subsequent subtask or as an output of the operation and wherein at least one of the subtasks receives said input operand. The method comprises :

- determining one or more properties of the variable output by one of the subtasks based on a model of noise sources stemming from the one subtask and/or on at least one property of an input to the one subtask, said one or more properties of the variable being characterized by the one or more parameters,
- determining the representation of the variable by fixing at least one of the parameters at a value so that the one or more properties meet the one or more predefined constraints,
- applying the representation of the variable in an implementation of the operation in the cryptographic application.

The proposed method presents a procedure to derive upfront one or more parameter values for representing a variable that is used when carrying out the operation. The proposed solution indeed allows obtaining a representation of that variable with parameters having optimal or close-to-optimal values given the constraints imposed on the output of the operation. The variable is an intermediate variable obtained as result of a certain subtask of the operation and used as input for a subsequent subtask or is a variable as output of the operation. In preferred embodiments the method steps are repeated for all variables that play a role in the operation being considered, as will be detailed below.

In a first step of the method one or more properties of a variable obtained at the subtask output are determined, that is to say, the relevant parameters characterizing a property of a variable. The one or more properties are relevant for assessing the predefined constraints. In some embodiments this is done based on at least one property of the variable(s) at the input of the subtask. In other embodiments the determination of properties is based on a model of noise sources stemming from the considered subtask. In yet other embodiments the two options are combined, i.e. both a noise model and one or more properties of the input to the subtask are used to find the one or more relevant properties (parameter(s)) for the variable being considered. In a next step one or more parameters to represent the variable are determined by fixing the parameter value(s) in such a way that the constraints imposed on the output of the operation are met. In preferred embodiments this is realised by solving an optimization problem. The representation of the variable with the parameter(s) as fixed in the preceding method step, is then applied in the actual implementation of the operation in the computer-implemented cryptographic application.

Compared to the prior art solutions the present invention offers several advantages. When determining a suitable representation of the variable that meets the one or more imposed constraints, it allows scanning the search space of possible parameter values in a much faster way than in conventional solutions. Indeed, in the prior art an iterative approach is required, where in each iteration another parameter value is tested. In the present invention, on the contrary, a one-shot approach is adopted to obtain a value for a parameter. The proposed method also allows quicker finding the optimal value for a parameter or at least a good approximation of that optimal value. The method of the invention is suitable for rapid prototyping.

In preferred embodiments the variable is characterized by means of one or more parameters of a set of parameters comprising {bit width, dynamic range, size of the integer part, size of the fractional part, location of decimal point, i.e. the separation between integer and fractional part}.

Preferably one or more subtasks of the operation are a multiplication and/or an addition.

Advantageously the method comprises a step of determining a total error introduced by the one or more subtasks.

In some embodiments one noise source stems from removing bits at the least significant bit side of an input of the one subtask. In other embodiments one noise source may stem from dropping bits at the most significant bit side of the input of the subtask. Note that the input of the subtask can also be seen as the output of a preceding subtask.

Advantageously, the operation is a multiplication or a multiply-accumulate operation performed by means of a fast Fourier transform and the input operand is a set of polynomials.

In another embodiment determining the representation of the variable output by one of said subtasks may comprise finding a maximum value to be represented by the variable.

In one embodiment some of the parameters are brought together in a group of parameters. This is advantageous especially when there is a large number of parameters. Grouping may then help in reducing the number of parameters in the model.

In a preferred embodiment the method as described is applied in a fully homomorphic encryption scheme.

In another preferred embodiment the operation is performed on a reconfigurable hardware device.

In another aspect the invention relates to a program, executable on a programmable device containing instructions which, when executed, perform the method as previously described.

In yet another aspect the invention relates to a device arranged to perform an operation on an input operand in a cryptographic application, whereby a resulting output of performing said operation meets one or more predefined constraints, said operation comprising one or more subtasks, wherein a subtask of said operation outputs a variable as an input for a subsequent subtask or as an output of the operation and wherein at least one of the subtasks receives said input operand, said device comprising processing means to determine one or more properties of said variable output by one of said subtasks based on a model of noise sources stemming from said one subtask and/or on at least one property of an input to said one subtask, said one or more properties of said variable being characterized by said one or more parameters, and to determine said representation of said variable by fixing at least one of said parameters at a value whereby said one or more properties meet said one or more predefined constraints and for applying said representation of said variable when performing said linear operation in said cryptographic application.

In a preferred embodiment the device is implemented as a hardware-accelerated computing system.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, wherein like reference numerals refer to like elements in the various figures.

Fig.1 illustrates a block scheme for performing a linear operation ax+by+c.
Fig.2 illustrates the intermediate variables and output variable in the scheme of Fig.1.
Fig.3 illustrates the introduction of the additional building blocks into the scheme of Fig.2.
Fig.4 illustrates the split scheme used for the calculations at the nodes in Example 2.
Fig.5 illustrates the butterfly structure as commonly used in FFT implementations.
Fig.6 illustrates the split into subtasks and the additional building blocks for the intermediate variables in the third example.
Fig.7 illustrates a scheme for a polynomial multiplication using an FFT.

**Detailed description of illustrative embodiments**

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention discloses a novel method to derive parameters that determine how to represent a variable while executing an operation (like e.g. an FFT) in a cryptographic application, e.g. in a Fully Homomorphic Encryption scheme, or how to represent an output variable obtained as a result of that operation.

While looking for ways to efficiently implement an FFT operation in cryptography applications, the inventors of the present invention made the following observations :

- A certain class of cryptographic applications require computations that include deterministic mathematical "noise". These applications can therefore also tolerate approximate computations that include deterministic algorithmic noise.
- Cryptography works with uniformly random values, which limits the dynamic range of the coefficients that are computed upon. This makes it easier to predict the necessary bit representation range, i.e. the word lengths, needed to represent the coefficients.
- The noise tolerated by the FFT in a cryptographic application depends on a (freely chosen) cryptographic parameter set rather than on application constraints. The cryptographic parameter set can be selected to tolerate either more or less noise.

These insights offer opportunities to perform the FFT operation in such a way that the intermediate variables applied when performing the operation have an optimized representation. In other words, they formed the trigger to come to the invention as presented here.

More in particular, the present invention presents a method to establish one or more parameters determining how to represent variables that are used when performing an operation on an input operand in a cryptographic application. While mathematical descriptions of algorithms to execute such an operation typically presume infinite precision of the variables, hardware and software implementations need to decide on specific types of representation of variables, such as fixed-point, floating point, block-floating point, and on the precision of the selected representations. This choice has an influence on the cost of the implementation and on the accuracy.

Once a choice for the representation type of each variable is made, one still has to decide on the exact parameters of this representation. For example, for a fixed-point representation one needs to decide on the least significant bit (LSB) and most significant bit (MSB) that are represented. A floating-point representation is parameterized by the smallest and largest possible values (hence, the bit size (word length)) of both the mantissa and the exponent. The MSB value, for example, characterizes whether overflow may occur or not. In this invention a method is presented to determine efficient values for one or more of these parameters of the representation for use in an implementation of a cryptographic application.

By way of example, the parameterization of the MSB and LSB are illustrated by the following. Assume a value a with 8 integer bits and 16 fractional bits, and a value b with 4 integer bits and 8 fractional bits. The full-precision result $c = a \times b$ then has $8+4=12$ integer bits and $16+8=24$ fractional bits. In this case one can say the MSB of c is at position 12 and the LSB is at position -24. In an implementation, a parameterization is performed for variable $c$ : $MSB_c$ and $LSB_c$. By cutting off bits at the MSB, i.e., performing a rescaling, (e.g., choosing $MSB_c = 11$), one allows a certain probability of overflow $P_{overflow}$. This value depends on the distribution of the values a and b, and in practice all MSBs are set such that, for example, $P_{overflow} < 2^{-64}$. By cutting off bits at the LSB side, some noise due to quantization is introduced, which adds to the output noise. Note that instead of cutting off any form of rounding can be considered.

Importantly, the representation of variables influences the cost of the implementations, as a bigger range of possible values entails more computational cost, but also leads to an implementation with higher accuracy. For a typical implementation, one will have design constraints on the accuracy of the output variable(s). These constraints are known upfront and, for example, can take the form of a maximal noise variance introduced or a maximal probability (e.g., $2^{-20}$ or $2^{-40}$) of having a variable overflow, without being limited thereto. The goal is to determine parameters that allow an efficient implementation, while fulfilling said design constraints.

A generic overview of the proposed approach is now provided. The method is applied on a specific algorithm (e.g., an FFT) to be implemented that performs an operation on an input operand in a cryptographic application. The input operand consists of one or more variables, depending on the operation being considered. For example, when the subtask performs a multiplication of two variables being fed to the subtask, the two variables may form the input operand. One or more constraints are imposed on certain properties of the resulting output of the operation (e.g., a maximum on the variance of the noise introduced). The goal is to determine efficient parameters of the representation of intermediate variables in the implementation and of the output variable. On a high level, the method comprises three main steps. First a model of the noise source(s) affecting the one or more constraints on the properties of said output is built in function of parameters of the representation(s) to be determined. In a next step specific values are determined for each parameter of the representations, so that all constraints are fulfilled. Preferably, the values for these parameters are determined in an optimal way, that is, according to an appropriate optimization function. The parameter values are then used to implement the operation on a programmable (hardware) device.

In some embodiments the operation is a linear operation, i.e. an operation f for which holds, for all x and y, that f(x+y) = *f(x)* + *f(y)* and that f(cx) = *c f(x),* with c a constant.

Carrying out the operation involves performing the one or more subtasks (e.g., additions, multiplications) of the operation, whereby at least one of the subtasks receives at their input the input operand of the operation. One of the subtasks outputs a variable that is the resulting output of the operation. Any subtask that does not generate an output of the considered operation produces a variable which is called in this description an intermediate variable. Any intermediate variable is next used as an input to one or more subsequent subtasks.

Building the model can be performed as follows. The algorithm performing the operation is split into various subtasks and the intermediate variables are identified. For each subtask the input-output behaviour of the properties with respect to the constraints (e.g., the noise introduced, the scaling factor of the input to the output, ...) is determined. For each of these variables the type of representation (i.e., fixed-point, floating point, ...) is chosen. The parameters of this representation (like e.g., highest representable value, lowest representable value, ...) are still undetermined and are initially left as symbolic variables, i.e., as variables without a specific value yet.

To analyse the execution of the algorithm, one makes use of an extra building block which is introduced in the scheme of the operation at the place of each intermediate variable. This building block represents the effect of the limited precision of the representation of the variable but has no effect on the algorithm itself. To achieve this, the extra building block has an input-output behaviour that links the symbolic parameters with the imposed constraints.

The algorithm is then stepped through from input to output and the model is built up for each constraint. For this, one or more relevant properties at the input of the subtasks or of the input operand are determined (e.g., noise variance, input variance, biggest possible value, ...) and these properties are then propagated to the output. For each subtask the input-output behaviour is used to transform the input properties to the corresponding output properties. As a result, one obtains for each constraint a model of the property on which a constraint is imposed in function of the symbolic parameters.

In a next step of the method values are determined for each of the symbolic parameters, so that the constraints are fulfilled. Preferably, these values are selected such that the implementation cost is as low as possible. One way to achieve this is to select a cost function for each symbolic parameter, that models the implementation cost for given values of this parameter. A solution can then be found by solving an optimization problem wherein one determines a value that reduces, and preferably minimizes, the overall cost function while adhering to all constraints.

Finally, the selected values for the parameters are applied to instantiate the design of the algorithm for performing the linear operation in the cryptographic application.

First example

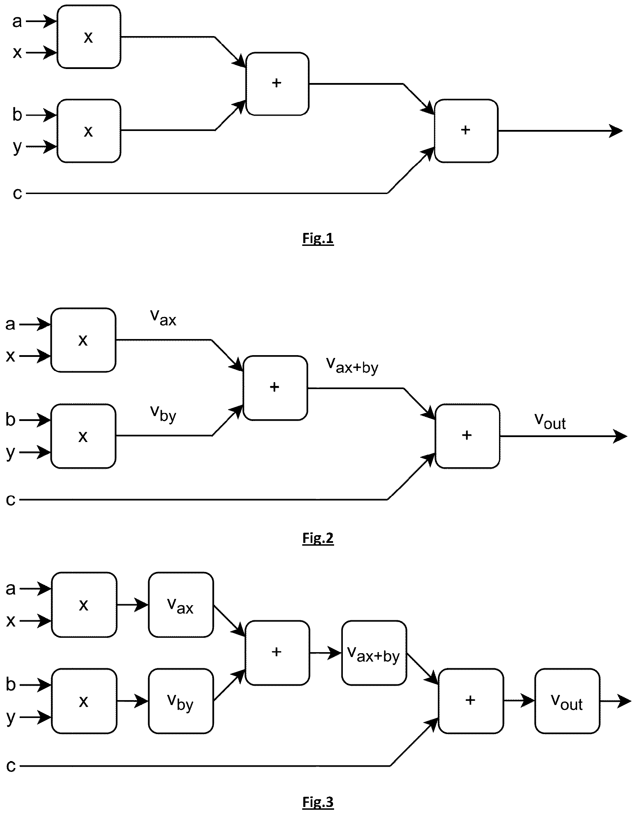

In a first example a simple algorithm is considered that computes for an input operand comprising an x value and an y value, a value of an expression ax + by + c, where the intermediate variables are represented as fixed-point numbers and a, b and c denote constants. The exact sequence of subtasks for this linear operation is given in Fig.1. Goal is to select a value for the position of the least significant bit (LSB) of each intermediate variable. The constraint is the maximal noise variance $\sigma^2_{maxnoise}$ for the output variable. For sake of simplicity it is in this example assumed that the input variances are distributed with a given variance and mean zero and that when the precision of the variables is reduced, this reduction is performed using a rounding operation.

As mentioned above, first a model is developed that allows evaluating the constraints. The computation is split into subtasks as shown in Fig.1 and the intermediate variables are identified. For each subtask the input-output behaviour with respect to properties relevant to the one or more imposed constraints needs to be determined. In this example the least significant bit (LSB) and variances of the noise and the signal are taken as the relevant properties. For a subtask $f(x,y)$ = $x + y$ being an addition of a first input x with $LSB_{in1}$ and $\sigma^2_{noise,in1}$ and a second input y with $LSB_{in2}$ and $\sigma^2_{noise,in2}$, one has the input-output behaviour

$$LSB_{out} = \min(LSB_{in1}, LSB_{in2})$$

and the noise

$$\sigma^2_{noise,out} = \sigma^2_{noise,in1} + \sigma^2_{noise,in2}.$$

For a multiplication $f(x,y) = x * y$ of the two inputs one has the input-output behaviour

$$LSB_{out} = LSB_{in1} + LSB_{in2}$$

and

$$\sigma^2_{noise,out} = \sigma^2_{noise,in1} * \sigma^2_{in2} + \sigma^2_{in1} * \sigma^2_{noise,in2} + \sigma^2_{noise,in1} * \sigma^2_{noise,in2}$$

(under the assumption that the inputs have a zero mean, which is assumed here for sake of simplicity). For each intermediate variable v (see Fig.2, where the intermediate variables have been given a subscript indicative of the operation they result from) one needs to introduce the symbolic parameters, which is the least significant bit $\mathbf{LSB_v}$. Symbolic parameters are put in bold to distinguish them from the other parameters or properties.

Next the intermediate variables are introduced in the scheme as additional building blocks, as depicted in Fig.3. These blocks model the inaccuracies due to the limited range of the representation. A model is built of the noise introduced due to cutting off the least significant bits with a uniform distribution, that is, the LSB bits that are cut off are independently uniformly distributed. For each of the additional building blocks one has the following input-output behaviour:

$$LSB_{out} = \mathbf{LSB_v}$$

and

$$\sigma^2_{noise,out} = \sigma^2_{noise,in} + ramp(2^{2\mathbf{LSBv}} - 2^{2LSBin})/12,$$

where the input has least significant bit $LSB_{in}$ and noise variance $\sigma^2_{noise,in}$ and where the latter term represents the increased noise level due to the reduction in the precision. The ramp() function returns a 0 for negative input values and returns the input value for positive input values. The reason for having this function is that additional noise is only present if there are relevant bits discarded, which happens if $\mathbf{LSB_v}$ < $LSB_{in}$.

Once the input-output behaviour is described, one can go through the model from start to end to determine the properties relevant to the constraints in function of the symbolic parameters. The intermediate calculations at the various nodes can then be written down. For example, after the multiplication of a and x one has

$$LSB = LSB_a + LSB_x$$

$$\sigma^2 = \sigma^2_a + \sigma^2_x$$

$$\sigma^2_{noise} = 0$$

After taking into account the additional building block and the inaccuracy in the representation of the intermediate variable $v_{ax}$, one has

$$LSB = \mathbf{LSB_{ax}}$$

$$\sigma^2 = \sigma^2_a + \sigma^2_x$$

$$\sigma^2_{noise} = ramp(2^{2\mathbf{LSBax}} - 2^{2(LSBa+LSBx)})/12$$

Similar expressions can be written down for the other branch, where b and y are multiplied. After adding b.y to a.x one can write

$$LSB = min(\mathbf{LSB_{ax}}, \mathbf{LSB_{by}})$$

$$\sigma^2 = \sigma^2_a * \sigma^2_x + \sigma^2_b * \sigma^2_y$$

$$\sigma^2_{noise} = ramp(2^{2\mathbf{LSBax}} - 2^{2(LSBa+LSBx)})/12 + ramp(2^{2\mathbf{LSBby}} - 2^{2(LSBb+LSBy)})/12$$

and accounting for the inaccurate representation of intermediate variable $v_{ax+by}$ one obtains

$$LSB = \mathbf{LSB_{ax+by}}$$

$$\sigma^2 = \sigma^2_a * \sigma^2_x + \sigma^2_b * \sigma^2_y$$

$$\sigma^2_{noise} = ramp(2^{2\mathbf{LSBax}} - 2^{2(LSBa+LSBx)})/12 + ramp(2^{2\mathbf{LSBby}} - 2^{2(LSBb+LSBy)})/12 + ramp(2^{2\mathbf{LSBax+by}} - 2^{2min(LSBax,LSBby)})/12$$

This processing eventually yields a value of the $\sigma^2_{noise,out}$ in function of the symbolic parameters $\mathbf{LSB_{ax}}$, $\mathbf{LSB_{by}}$, $\mathbf{LSB_{ax+by}}$ and $\mathbf{LSB_{out}}$. Remember that this value was constrained to be below or equal to the maximal noise variance $\sigma^2_{maxnoise}$ at the output.

In a next step of the method the values of the symbolic parameters are determined. The constraint function $\sigma^2_{noise,out}(\mathbf{LSB_{ax}}, \mathbf{LSB_{by}}, \mathbf{LSB_{ax+by}}, \mathbf{LSB_{out}}) \leq \sigma^2_{maxnoise}$ was derived in the previous step. The parameters should now each be fixed to a value so that this constraint is fulfilled. One way to do this is to construct a cost function, for example a function where all parameters are costed equally according to their bit width, which would result in the cost function: $\mathbf{LSB_{ax}}$ + $\mathbf{LSB_{by}}$ + $\mathbf{LSB_{ax+by}}$ + $\mathbf{LSB_{out}}$. Efficient parameter values can then be found using an optimizer that optimizes the cost function under the given constraint. In some embodiments of the method it is of course possible to change the cost function to a function that more closely represents the implementation costs.

A different cost function one might look at is for example an implementation on an FPGA where the multiplications are performed in the dedicated DSP blocks. In this case one has a multiplication of 18 bits available, which can be extended to more bits at the cost of using multiple of these DSP blocks. A multiplication can then be costed as 1 if the bit width (MSB - LSB) is between 1 and 18, and 3 if the bit width is between 19 and 36.

In embodiments where one risks an explosion in the number of noise sources, noise sources with (approximately) similar properties can be bundled by adding them together. This makes the number of variables to consider smaller.

Second example

The same algorithm as in the first example is considered to compute ax + by + c, but now another constraint is added, namely no variable overflows, and the most significant bit $MSB_v$ is added as a symbolic parameter that needs to be determined. Below the extra steps are discussed required in the method to account for this extra constraint.

Input-output behaviour relevant to the overflow constraint is added. Two extra properties are kept track of: the maximum absolute value (MAV) of a variable and a list of all previous overflow conditions. Such a list is drawn up for each intermediate variable and represents a condition on that variable that needs to be fulfilled to avoid overflows. The input-output behaviour with respect to these properties is then as follows. For the addition $MAV_{out} = MAV_{op1} + MAV_{op2}$ and the list of overflow conditions of the inputs are combined into a new, combined list of overflow conditions. For the multiplication $MAV_{out} = MAV_{op1} * MAV_{op2}$ and as before the list of overflow conditions of the inputs are combined into a new list with overflow conditions.

Next the input-output behaviour of the intermediate variable building blocks must be added. Here one has $MAV_{out} = MAV_{in}$ and the condition $MSB_v \geq \log_2(MAV_{in})$ is added to the list of overflow conditions.

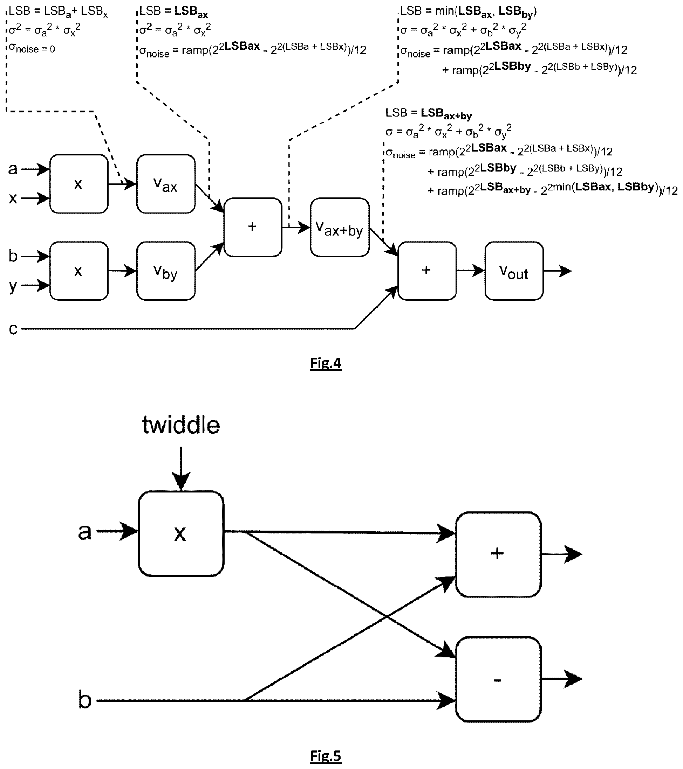

Fig.4 illustrates the calculation of some properties. After the multiplication of a and x one has

$$MAV = MAV_a * MAV_x$$

$$List = []$$

With the additional building block $v_{ax}$ included this becomes :

$$MAV = MAV_a * MAV_x$$

$$List = [MSB_{ax} \geq \log_2(MAV_a * MAV_x)]$$

Again, similar expressions can be written down for the branch where the multiplication of b and y is performed. Once the sum *a.x + b.y* has been made, the following expressions result

$$MAV = MAV_a * MAV_x + MAV_b * MAV_y$$

$$List = [MSB_{ax} \geq \log_2(MAV_a * MAV_x), MSB_{by} \geq \log_2(MAV_b * MAV_y)]$$

After the additional block for $v_{ax+by}$ :

$$MAV = MAV_a * MAV_x + MAV_b * MAV_y$$

$$List = [MSB_{ax} \geq \log_2(MAV_a * MAV_x), MSB_{by} \geq \log_2(MAV_b * MAV_y)]$$

$$LSB_{ax+by} \geq \log_2(MAV_a * MAV_x + MAV_b * MAV_y)]$$

Next again values are determined for the symbolic parameters. This may be done by constructing a cost function as already discussed above.

The method described above can be generalized to other constraints, input distributions or circumstances. One can for example consider other constraints, such as a maximum probability of overflowing $P_{overflow,max}$ at each variable. For this constraint one then keeps track of the distribution of the variables throughout the algorithm and at each intermediate variable v add the condition that $P[v > 2^{MSBv}] < P_{overflow,max}$. A simplified version of this condition could track only the variance (and potentially the mean) of variables and make an assumption on their distribution, whereby typically a Gaussian distribution is assumed due to the central limit theorem.

Third example

One notable application field of the method of the present invention is where polynomial multiplications are performed by means of a Fast Fourier Transformation (FFT). Adopting the FFT scheme allows performing the polynomial multiplication in an accelerated way. FFT-based multiplication is as such a well-known technique and relies on the convolution theorem :

$$c = a \times b = FFT^{-1}(FFT(a).FFT(b))$$

where c, a and b denote polynomials. FFT based multiplication is recently also finding its way into cryptographic applications, e.g., in Fully Homomorphic Encryption (FHE). FFT-based multiplication works by converting the input polynomials into another representation using the FFT. In this domain the multiplication operation can be performed pointwise (N operations). Afterwards, the result needs to be converted back to the initial representation using the inverse FFT (IFFT). The FFT and IFFT conversion operations are typically the most expensive operations of the FFT-based multiplication requiring $O(N.\log(N))$ operations, with N the number of coefficients in the polynomials. The number of coefficients determines the FFT depth and width and other parameters.

An FFT-based multiplication operates on complex numbers, with both the real and imaginary part being real numbers, whereas other multiplication algorithms use integers. When a finite precision is used to represent real numbers, the computation of a multiplication is not always exact and can be noisy, i.e. a small error $\delta$ could be introduced :

$$FFT^{-1}\big(FFT(a).FFT(b)\big) = c + \delta$$

It is due to the specific nature of FHE that a certain level of noise introduced by the FFT can be tolerated. In FHE, there is already (mathematical) noise in the equations that is required for security. FHE is inherently tolerant to a certain level of this mathematical noise, and the additional noise due to the use of the FFT can also be tolerated up to a certain level. This means that the magnitude of the noise $\delta$ needs to be considered very carefully. Implementations of FHE impose tight restrictions on the introduced noise. If too much noise is introduced by the FFT into the polynomial multiplication, computations fail and return an incorrect result.

The NTT is an exact variant of the FFT where $\delta = 0$, but, as already mentioned, imposes restrictions on the parameters of the cryptographic scheme.

An important part of the FFT transformation is the butterfly operation as depicted in the diagram of Fig.5. The butterfly operation with its two inputs and two outputs is well-known in the implementation of an FFT algorithm and recursively breaks down a discrete Fourier Transform of composite size $n = rm$ into $r$ smaller transforms of size $m$ where $r$ is the radix of the transform. These smaller DFTs are then combined via size-$r$ butterflies, which themselves are DFTs of size $r$ (performed m times on corresponding outputs of the sub-transforms) pre-multiplied by roots of unity known as twiddle factors.

The variables in the fast Fourier transformation, and thus also in the butterfly operations, are complex numbers. However, it is typically possible to assume the distribution and properties of the real and imaginary part are the same. In such a scenario, one can focus in the analysis on the properties of the real part only.

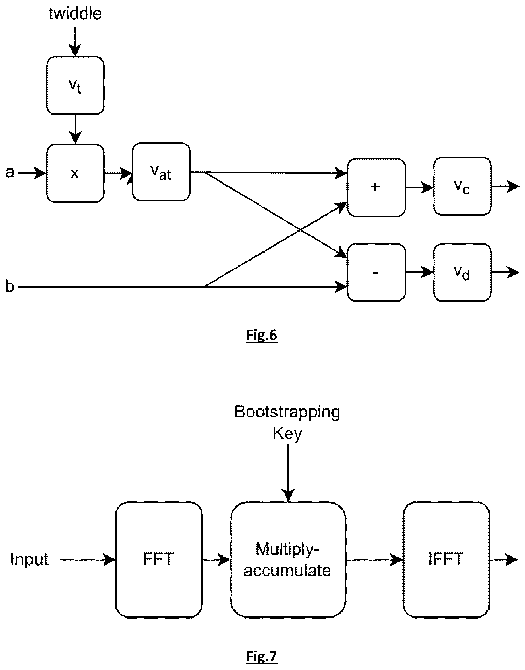

In the example considered here a maximal noise variance constraint (just as in the first example) is imposed on the butterfly structure. Again, a division of the algorithm into subtasks is first performed. Next, additional building blocks are added to the scheme for intermediate variables $v_{at}$, $v_c$, $v_d$ as depicted in Fig.6.

The multiplication subtask can be simplified by exploiting knowledge of the twiddle input properties. An interesting property of any twiddle factor t with real part $t_{real}$ and imaginary part $t_{imag}$ is that $t_{real}^2 + t_{imag}^2 = 1$. Given a number x with a same variance of the real and imaginary part, a multiplication of x with a twiddle factor t does not change the variance, i.e. $\text{var}(x.t) = \text{var}(x)$. This can readily be derived as follows:

$$\begin{aligned}
&\text{var}\left(\text{real}\left((x_{real} + i \cdot x_{imag}) \cdot (t_{real} + i \cdot t_{imag})\right)\right) \\
&= \text{var}\left(x_{real} \cdot t_{real} - x_{imag} \cdot t_{imag}\right) \\
&= t_{real}^2 \cdot \text{var}(x_{real}) + t_{imag}^2 \cdot \text{var}(x_{imag}) \\
&= \text{var}(x_{real}),
\end{aligned}$$

For the multiplication the input-output behaviour can thus be described as $LSB_{at} = LSB_a + LSBt$ and $\sigma^2_{noise,out} = \sigma^2_{noise,x} + \sigma^2_x \sigma^2_{noise,t}$ (again under the assumption that the input has zero mean). Note that the input-output behaviour of the addition block where variables *in1* and *in2* are added, remains the same as before, i.e. :

$$LSB_{out} = \min(LSB_{in1}, LSB_{in2}) \text{ and } \sigma^2_{noise,out} = \sigma^2_{noise,in1} + \sigma^2_{noise,in2}$$

The model can then be computed by starting from the twiddle input, which has reduced accuracy due to the finite representation (except for twiddles 1 and -1).

$$LSB = \mathbf{LSB_t}$$

$$\sigma^2 = 1$$

$$\sigma^2_{noise} = 2^{2LSBt}/12$$

After the additional building block for intermediate variable $v_{at}$ one thus obtains for the real part of the product:

$$LSB = \mathbf{LSB_{at}}$$

$$\sigma^2 = \sigma^2_a$$

$$\sigma^2_{noise} = \sigma^2_{noise,a} + 2^{2LSBt}/12 * \sigma^2_a + ramp(2^{2LSBat} - 2^{2(LSBa)})/12$$

For the imaginary part similar expressions result.
After the additional building block for intermediate variable $v_c$ one can write :

$$LSB_{out} = LSB_c$$

$$\sigma^2_c = \sigma^2_a + \sigma^2_b$$

$$\sigma^2_{noise,out} = \sigma^2_{noise,c} = \sigma^2_{noise,a} + 2^{2LSBt}/12 * \sigma^2_a + \sigma^2_{noise,b}$$

$$+ ramp(2^{2LSBat} - 2^{2(LSBa)})/12 + ramp(2^{2LSBc} - 2^{2min(LSBat, LSBb)})/12$$

Fourth example

In the fourth example polynomial multiplication using FFT is considered, with the specific use case of fully homomorphic encryption schemes. The goal of this operation is to compute the inner product between the input (being a vector of polynomials) and a bootstrapping key (also a vector of polynomials). To efficiently process such a multiplication, one might use a three-step procedure: an FFT, coefficientwise multiplication and accumulation, and an inverse FFT. Such a procedure is depicted in Fig.7. Note that contrary to typical FFT-based multiplications, the second multiplication term (i.e., the bootstrapping key) does not undergo an explicit FFT operation in the figure. This is because the input is known beforehand and the FFT can thus be precomputed with very high accuracy, which implies this specific FFT does not need to be taken into account in the method.
First the multiply-accumulate operation is considered. This operation is performed coefficientwise and can thus be modelled using multiplication and addition operations similar as discussed in example 1 and 2. The FFT and inverse FFT operation mainly comprise of several layers of butterfly operations. Therefore, applying the analysis of example 3 on these butterflies yields a model of the FFT and IFFT operations. In some embodiments of the polynomial multiplication the implementation may use a different type of butterfly operation (radix-2, radix-4, ...), but the analysis of these butterflies can be done similarly to the analysis in example 3. By combining the previously discussed building blocks, one can construct a noise model of the full FFT based polynomial multiplication.
One challenge is the substantial number of operations, and thus the substantial number of parameters, that need to be determined. To reduce the number of parameters in the model one might group similar parameters together. In this example, there is a high degree of parallelism and structure that can be used to this end. One might for example combine similar parameters of variables that are in the same 'layer' of the FFT (i.e., variables that have undergone the same number of butterfly operations) or the variables after the multiplication operation in the multiply-accumulate. This would reduce the number of parameters from roughly $O((V+1) N/2 \log2(N/2))$, with V the vector length and N the number of coefficients in the polynomials, to about $O(2\log2(N/2))$ as this is approximately the number of layers in the proposed algorithm.
Further, it is to be noted that typical cryptographic applications like FHE require performing a negacyclic convolution rather than a conventional cyclic convolution. In the cyclic convolution (with N coefficients), coefficients that are out of bounds (at position i>N) are cycled around to the first coefficients (at position i-N). In the negacyclic convolution on the contrary, these coefficients are not only cycled around, but also negated. To achieve this, many implementations of cryptographic algorithms perform a so-called twist-and-fold step at the start and the end of the algorithm, which accounts for the negacyclic behaviour. This twist-and-fold step comprises an extra packing of the input and a multiplication with a complex number. The packing takes two integers a, b and combines them into a complex number a +bi. This operation typically does not produce any noise. The additional multiplication operation can be modelled using the approaches of examples 1 and 2.

As already mentioned, one has to select a type of representation for the variables. In an FFT scheme, for example for performing polynomial multiplication, a fixed-point representation is advantageously selected. The method as set above can then be applied to determine the parameters of the fixed-point representation of the variables that occur when performing the operation, while the imposed constraints are met.

Given the optimal parameters obtained with the method according to this invention, a hardware circuit can be constructed with fixed-point arithmetic for these parameters. In practice, it may be advantageous to have a library of parameterized hardware circuit implementations, where the fixed-point bit-widths are generic parameters. A circuit can be chosen to match the input types, and these parameters are set at "circuit-synthesis time" to match the required output noise $\delta$.

Given the optimal parameters, a hardware circuit can be simulated with this parameter set. the output noise $\delta$ is measured, and the output noise can be compared to a floating-point reference implementation. The output noise is verified to meet the noise bounds (e.g., standard-deviation 2) determined above. An FPGA bitstream can be created for the circuit with the optimal fixed-point parameter set determined in the method as presented above. The FPGA bitstream allows accelerating the FHE bootstrapping procedure, which involves many (thousands) iterations of polynomial-vector multiplication.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Method for deriving, by means of a device comprising processing means, one or more parameters determining a representation of a variable used when performing an operation on an input operand in a cryptographic application, whereby a resulting output of performing said operation meets one or more predefined constraints, said operation comprising one or more subtasks, wherein a subtask of said operation outputs said variable as an input for a subsequent subtask or as an output of the operation and wherein at least one of the subtasks receives said input operand, the method comprising :

   - determining one or more properties of said variable output by one of said subtasks based on a model of noise sources stemming from said one subtask and/or on at least one property of an input to said one subtask, said one or more properties of said variable being **characterized by** said one or more parameters,
   - determining said representation of said variable by fixing at least one of said parameters at a value so that said one or more properties meet said one or more predefined constraints,
   - applying said representation of said variable in an implementation of said operation in said cryptographic application.

2. Method for determining as in claim 1, wherein said variable is **characterized by** means of one or more parameters of a set of parameters comprising {bit width, dynamic range, size of the integer part, size of the fractional part, location of decimal point}.

3. Method for determining as in claim 1 or 2, wherein said one or more subtasks comprise one or more of the group of subtasks comprising {a multiplication, an addition}.

4.  Method for determining as in any of claims 1 to 3, comprising determining a total error introduced by said one or more subtasks comprised in said operation.

5.  Method for determining as in any of the previous claims, wherein one noise source stems from removing bits at the least significant bit side of an input of said one subtask.

6.  Method for determining as in any of the previous claims, wherein one noise source stems from dropping bits at the most significant bit side of said input of said one subtask.

7.  Method for determining as in any of the previous claims, wherein said operation is a multiplication or a multiply-accumulate operation performed by means of a fast Fourier transform and wherein said input operand is a set of polynomials.

8.  Method for determining as in any of the previous claims, wherein determining said representation of said variable output by one of said subtasks comprises finding a maximum value to be represented by said variable.

9.  Method for determining as in any of the previous claims, wherein some of said parameters are brought together in a group of parameters.

10. Method for determining as in any of the previous claims, applied in a fully homomorphic encryption scheme.

11. Method for determining as in any of the previous claims, wherein said operation is performed on a reconfigurable hardware device.

12. A program, executable on a programmable device containing instructions which, when executed, perform the method as in any of claims 1 to 11.

13. A device arranged to perform an operation on an input operand in a cryptographic application, whereby a resulting output of performing said operation meets one or more predefined constraints, said operation comprising one or more subtasks, wherein a subtask of said operation outputs a variable as an input for a subsequent subtask or as an output of the operation and wherein at least one of the subtasks receives said input operand, said device comprising processing means to determine one or more properties of said variable output by one of said subtasks based on a model of noise sources stemming from said one subtask and/or on at least one property of an input to said one subtask, said one or more properties of said variable being **characterized by** said one or more parameters, and to determine said representation of said variable by fixing at least one of said parameters at a value whereby said one or more properties meet said one or more predefined constraints and for applying said representation of said variable when performing said operation in said cryptographic application.

14. The device of claim 13, implemented as a hardware-accelerated computing system.

**Patentansprüche**

1.  Verfahren zum Ableiten mittels einer Vorrichtung, die Verarbeitungsmittel umfasst, eines oder mehrerer Parameter die eine Darstellung einer Variablen bestimmen, die beim Durchführen einer Operation auf einem Eingabeoperanden in einer kryptografischen Anwendung verwendet wird, wodurch eine resultierende Ausgabe der Durchführung der Operation eine oder mehrere vordefinierte Bedingungen erfüllt, wobei die Operation eine oder mehrere Teilaufgaben umfasst, wobei eine Teilaufgabe der Operation die Variable als Eingabe für eine nachfolgende Teilaufgabe oder als Ausgabe der Operation ausgibt und wobei mindestens eine der Teilaufgaben den Eingabeoperanden empfängt, wobei das Verfahren umfasst:

    - Bestimmen einer oder mehrerer Eigenschaften der variablen Ausgabe durch eine der Teilaufgaben basierend auf einem Modell von Rauschquellen, die von dieser einen Teilaufgabe ausgehen und/oder auf mindestens einer Eigenschaft einer Eingabe in die eine Teilaufgabe, wobei die eine oder mehreren Eigenschaften der Variablen durch den einen oder mehrere Parameter gekennzeichnet sind,
    - Bestimmen der Darstellung der Variablen durch Fixieren mindestens eines der Parameter auf einen Wert, sodass die eine oder mehreren Eigenschaften die eine oder mehreren vordefinierte Bedingungen erfüllen,
    - Anwenden der Darstellung der Variablen bei einer Implementierung der Operation in der kryptografischen Anwendung.

**2.** Verfahren zum Bestimmen nach Anspruch 1, wobei die Variable durch einen oder mehrere Parameter eines Parametersatzes gekennzeichnet ist, umfassend {Bit Breite, Dynamikbereich, Größe des ganzzahligen Teils, Größe des Bruchteils, Stelle des Dezimaltrennzeichens}.

**3.** Verfahren zum Bestimmen nach Anspruch 1 oder 2, wobei die eine oder mehreren Teilaufgaben eine oder mehrere der Gruppen von Teilaufgaben umfassen, umfassend {eine Multiplikation, eine Addition}.

**4.** Verfahren zum Bestimmen nach einem der Ansprüche 1 bis 3, umfassend Bestimmen eines Gesamtfehlers, der durch die eine oder mehreren Teilaufgaben, die in der Operation umfasst sind, eingeführt wird.

**5.** Verfahren zum Bestimmen nach einem der vorstehenden Ansprüche, wobei eine Rauschquelle durch Entfernen von Bits auf der niederwertigsten Bit-Seite einer Eingabe der einen Teilaufgabe ausgeht.

**6.** Verfahren zum Bestimmen nach einem der vorstehenden Ansprüche, wobei eine Rauschquelle durch Weglassen von Bits auf der höchstwertigen Bit-Seite der Eingabe der einen Teilaufgabe ausgeht.

**7.** Verfahren zum Bestimmen nach einem der vorstehenden Ansprüche, wobei die Operation eine Multiplikation oder eine Multiplikations-Akkumulations-Operation ist, die mittels einer schnellen FourierTransformation durchgeführt wird, und wobei der Eingangsoperand ein Satz von Polynomen ist.

**8.** Verfahren zum Bestimmen nach einem der vorstehenden Ansprüche, wobei Bestimmen der Darstellung der Variablen, die von einer der Teilaufgaben ausgegeben wird, Finden eines Maximalwerts umfasst, der durch die Variable dargestellt werden soll.

**9.** Verfahren zum Bestimmen nach einem der vorstehenden Ansprüche, wobei einige der Parameter in einer Gruppe von Parametern zusammengeführt werden.

**10.** Verfahren zum Bestimmen nach einem der vorstehenden Ansprüche, das in einem vollständig homomorphen Verschlüsselungsschema angewendet wird.

**11.** Verfahren zum Bestimmen nach einem der vorstehenden Ansprüche, wobei die Operation auf einer rekonfigurierbaren Hardwarevorrichtung durchgeführt wird.

**12.** Programm, das auf einer programmierbaren Vorrichtung ausführbar ist und Anweisungen enthält, die bei Ausführung das Verfahren nach einem der Ansprüche 1 bis 11 durchführen.

**13.** Vorrichtung, die angeordnet ist, um eine Operation an einem Eingabeoperanden in einer kryptografischen Anwendung durchzuführen, wobei eine resultierende Ausgabe der Durchführung der Operation eine oder mehrere vordefinierte Bedingungen erfüllt, wobei die Operation eine oder mehrere Teilaufgaben umfasst, wobei eine Teilaufgabe der Operation die Variable als Eingabe für eine nachfolgende Teilaufgabe oder als Ausgabe der Operation ausgibt und wobei mindestens eine der Teilaufgaben den Eingabeoperanden empfängt, wobei die Vorrichtung Verarbeitungsmittel umfasst, um eine oder mehrere Eigenschaften der von einer der Teilaufgaben ausgegebenen Variable basierend auf einem Modell von Rauschquellen zu bestimmen, die von dieser einen Teilaufgabe ausgehen, und/oder auf mindestens einer Eigenschaft einer Eingabe für die Teilaufgabe, wobei die eine oder mehreren Eigenschaften der Variablen durch den einen oder mehrere Parameter gekennzeichnet sind, und um die Darstellung der Variablen durch Fixieren mindestens eines der Parameter auf einen Wert zu bestimmen, sodass die eine oder mehreren Eigenschaften die eine oder mehreren vordefinierte Bedingungen erfüllen, und zum Anwenden der Darstellung der Variablen bei der Durchführung der Operation in der kryptografischen Anwendung.

**14.** Vorrichtung nach Anspruch 13, die als Hardware-beschleunigtes Rechensystem implementiert wird.

**Revendications**

**1.** Procédé pour dériver, au moyen d'un dispositif comprenant des moyens de traitement, un ou plusieurs paramètres déterminant une représentation d'une variable utilisée lors de l'exécution d'une opération sur un opérande d'entrée dans une application cryptographique, de sorte qu'un résultat de l'exécution de ladite opération respecte une ou plusieurs contraintes prédéfinies, ladite opération comprenant une ou plusieurs sous-tâches, dans laquelle une sous-tâche de ladite opération produit ladite variable en tant qu'entrée pour une sous-tâche suivante ou en tant que sortie de l'opération et dans laquelle au moins une des sous-tâches reçoit ledit opérande d'entrée, le procédé comprenant :

- la détermination d'une ou plusieurs propriétés de ladite variable produite par l'une desdites sous-tâches sur la base d'un modèle de sources de bruit provenant de ladite sous-tâche et/ou sur au moins une propriété d'une entrée de ladite sous-tâche, ladite ou lesdites propriétés de ladite variable étant **caractérisées par** ledit ou lesdits paramètres,
- la détermination de ladite représentation de ladite variable en fixant au moins un desdits paramètres à une valeur de sorte que ladite ou lesdites propriétés respectent ladite ou lesdites contraintes prédéfinies,
- l'application de ladite représentation de ladite variable dans une mise en œuvre de ladite opération dans ladite application cryptographique.

2. Procédé de détermination selon la revendication 1, dans lequel ladite variable est caractérisée au moyen d'un ou plusieurs paramètres d'un ensemble de paramètres comprenant {largeur de bit, plage dynamique, taille de la partie entière, taille de la partie fractionnaire, emplacement du point décimal}.

3. Procédé de détermination selon la revendication 1 ou 2, dans lequel ladite ou lesdites sous-tâches comprennent une ou plusieurs du groupe de sous-tâches comprenant {une multiplication, une addition}.

4. Procédé de détermination selon l'une quelconque des revendications 1 à 3, comprenant la détermination d'une erreur totale introduite par ladite ou lesdites sous-tâches comprises dans ladite opération.

5. Procédé de détermination selon l'une quelconque des revendications précédentes, dans lequel une source de bruit provient de la suppression de bits du côté du bit de poids faible d'une entrée de ladite sous-tâche.

6. Procédé de détermination selon l'une quelconque des revendications précédentes, dans lequel une source de bruit provient de la suppression de bits du côté du bit de poids fort de ladite entrée de ladite sous-tâche.

7. Procédé de détermination selon l'une quelconque des revendications précédentes, dans lequel ladite opération est une multiplication ou une opération de multiplication-accumulation effectuée au moyen d'une transformation de Fourier rapide et dans lequel ledit opérande d'entrée est un ensemble de polynômes.

8. Procédé de détermination selon l'une quelconque des revendications précédentes, dans lequel la détermination de ladite représentation de ladite variable produite par l'une desdites sous-tâches comprend la recherche d'une valeur maximale à représenter par ladite variable.

9. Procédé de détermination selon l'une quelconque des revendications précédentes, dans lequel certains desdits paramètres sont regroupés dans un groupe de paramètres.

10. Procédé de détermination selon l'une quelconque des revendications précédentes, appliqué dans un schéma de chiffrement entièrement homomorphe.

11. Procédé de détermination selon l'une quelconque des revendications précédentes, dans lequel ladite opération est effectuée sur un dispositif matériel reconfigurable.

12. Un programme, exécutable sur un dispositif programmable contenant des instructions qui, lorsqu'elles sont exécutées, réalisent le procédé selon l'une quelconque des revendications 1 à 11.

13. Un dispositif agencé pour effectuer une opération sur un opérande d'entrée dans une application cryptographique, de sorte qu'un résultat de l'exécution de ladite opération respecte une ou plusieurs contraintes prédéfinies, ladite opération comprenant une ou plusieurs sous-tâches, dans laquelle une sous-tâche de ladite opération produit une variable en tant qu'entrée pour une sous-tâche suivante ou en tant que sortie de l'opération et dans laquelle au moins une des sous-tâches reçoit ledit opérande d'entrée, ledit dispositif comprenant des moyens de traitement pour déterminer une ou plusieurs propriétés de ladite variable produite par l'une desdites sous-tâches sur la base d'un modèle de sources de bruit provenant de ladite sous-tâche et/ou sur au moins une propriété d'une entrée de ladite sous-tâche, ladite ou lesdites propriétés de ladite variable étant **caractérisées par** ledit ou lesdits paramètres, et pour déterminer ladite représentation de ladite variable en fixant au moins un desdits paramètres à une valeur de sorte que ladite ou lesdites propriétés respectent ladite ou lesdites contraintes prédéfinies et pour appliquer ladite représentation de ladite variable lors de l'exécution de ladite opération dans ladite application cryptographique.

14. Le dispositif selon la revendication 13, mis en œuvre comme un système informatique accéléré par matériel.

Fig.1

Fig.2

Fig.3

$LSB = LSB_a + LSB_x$
$\sigma^2 = \sigma_a^2 * \sigma_x^2$
$\sigma_{noise} = 0$

$LSB = \mathbf{LSB_{ax}}$
$\sigma^2 = \sigma_a^2 * \sigma_x^2$
$\sigma_{noise} = ramp(2^{2\mathbf{LSBax}} - 2^{2(LSBa + LSBx)})/12$

$LSB = min(\mathbf{LSB_{ax}, LSB_{by}})$
$\sigma = \sigma_a^2 * \sigma_x^2 + \sigma_b^2 * \sigma_y^2$
$\sigma_{noise} = ramp(2^{2\mathbf{LSBax}} - 2^{2(LSBa + LSBx)})/12$
$+ ramp(2^{2\mathbf{LSBby}} - 2^{2(LSBb + LSBy)})/12$

$LSB = \mathbf{LSB_{ax+by}}$
$\sigma = \sigma_a^2 * \sigma_x^2 + \sigma_b^2 * \sigma_y^2$
$\sigma_{noise} = ramp(2^{2\mathbf{LSBax}} - 2^{2(LSBa + LSBx)})/12$
$+ ramp(2^{2\mathbf{LSBby}} - 2^{2(LSBb + LSBy)})/12$
$+ ramp(2^{2\mathbf{LSBax+by}} - 2^{2min(\mathbf{LSBax, LSBby})})/12$

**Fig.4**

**Fig.5**

twiddle

**Fig.6**

Bootstrapping
Key

**Fig.7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. DUCAS et al.** FHEW: Bootstrapping homomorphic encryption in less than a second. *Eurocrypt*, 2015, 617-640
- **I. CHILLOTTI et al.** TFHE: Fast Fully Homomorphic Encryption Over the Torus. *J.Cryptol.*, 2020, vol. 33, 34-91

- **L. JIANG et al.** MATCHA: A Fast and Energy-Efficient Accelerator for Fully Homomorphic Encryption over the Torus. *Annual Design Automation Conference*, 17 February 2022